# EUROPEAN PATENT APPLICATION

(11) **EP 2 942 086 A1**
(43) Date of publication of application: **11.11.2015**
(21) Application number: 15167040.3
(22) Date of filing: 08.05.2015
(51) Int. Cl.: A63B 29/02, A41D 27/20, A41D 1/08

(54) **AVALANCHE TRANSCEIVER CARRYING SYSTEM**

(30) Priority: 08.05.2014 US 201414272559
(71) Applicant: Black Diamond Equipment AG, 4153 Reinach (CH)
(72) Inventor: Linden, Martijn, Salt Lake City, UT Utah 84105 (US); Latham, Tara Fallis, Salt Lake City, UT Utah 84102 (US); Bantle, Timothy D., Salt Lake City, UT Utah 84105 (US)
(74) Representative: Braun, André jr.

(57) **Abstract**

One embodiment of the present invention relates to a snow sport lower body avalanche transceiver attachment system (100) including a garment (120), a pocket (150), a sleeve (170), and a continuous strap (190). The garment (120) is a lower extremity snow sport garment such as a pair of snow pants or bib with a waist belt region (122) and a pair of leg members (124). The pocket (150) is located on one of the leg members (124) and includes an internal region (154) and a selective closure system (152) such as a zipper. The sleeve (170) is located within the internal region (154) of the pocket (150) and includes an opening (174) and an internal transceiver region (172) shaped to accommodate an avalanche transceiver (250). The continuous strap (190) may be a single piece of nylon webbing stitched in one or more locations. The continuous strap (190) encircles the transceiver region (172) of the sleeve (170) and extends to the waist belt region (122) of the garment.

## Description

### FIELD OF THE INVENTION

The invention generally relates to avalanche transceiver carrying systems. In particular, the present invention relates to a lower extremity avalanche transceiver carrying system.

### BACKGROUND OF THE INVENTION

Avalanche transceivers are used to locate victims which are buried during a snow avalanche. Transceivers include both transmitters and receivers to be used by both the locators and victims. For example, the transceiver of a buried skier will transmit a signal which may be received and located by the transceiver of a non-buried skier. Avalanche transceivers include various modes of operation and functionalities. In particular, all transceivers include a default transmission mode and a selectively engageable search mode. The search mode is used by a rescuer to locate buried victims after an avalanche has occurred. A user must selectively engage the search mode, and various sensory indicators are provided to enable efficient location of one or more buried victims.

To prevent accidental dropping or damage, avalanche transceivers include a chest or upper torso harness system that allows users to securely fasten the transceiver to the upper body. Most transceiver harness systems include a loop to be placed over the user's head and a releasable strap to be secured around the user's chest. The combination of loop and strap securely fasten the transceiver to the user's chest. The transceiver may be secured over certain clothing but under one or more outer layers. The head loop is intended as a permanent attachment point to be maintained on the user during the entire snow sport activity. In contrast, the chest strap is intended to be released if the transceiver is selectively used in the searching function. For example, if the user intends to search for an avalanche victim, they may release the chest strap, extract the transceiver from within any clothing, and operate the search function transceiver while maintaining the neck loop.

Unfortunately, the location of the system on the upper body of the user presents multiple problems during snow sport activities and is therefore undesirable. The included harness system of existing conventional avalanche systems only permits secure attachment to the upper body. However, alternative transceiver locations fail to provide the same level of attachment security that the intended chest harness system provides during operation. For example, simply placing the transceiver in a pocket does not securely maintain the user attachment if the pocket is inadvertently opened or some form of damage occurs to the pocket covering.

Therefore, there is a need in the industry for a secure lower-body avalanche transceiver attachment system that overcomes the problems of conventional systems.

### SUMMARY OF THE INVENTION

The present invention relates to avalanche transceiver carrying systems. One embodiment of the present invention relates to a snow sport lower body avalanche transceiver attachment system including a garment, a pocket, a sleeve, and a continuous strap. The garment is a lower extremity snow sport garment such as a pair of snow pants or bib with a waist belt region and a pair of leg members. The pocket is located on one of the leg members and includes an internal region and a selective closure system such as a zipper. The sleeve is located within the internal region of the pocket and includes an opening and an internal transceiver region shaped to accommodate an avalanche transceiver. The continuous strap may be a single piece of nylon webbing stitched in one or more locations. The continuous strap encircles the transceiver region of the sleeve and extends to the waist belt region of the garment. The continuous strap includes a releasable buckle over an opening to the sleeve and forms a waist belt loop on the waist belt region. The continuous strap therefore secures the coupling between the transceiver and the user that is comparable to a conventional chest strap configuration. A second embodiment of the present invention relates to a method of coupling an avalanche transceiver to a lower extremity snow sport garment.

Embodiments of the present invention represent a significant advance in the field of avalanche transceiver attachment systems. Conventional upper extremity avalanche transceiver coupling systems are undesirable in a variety of areas, including comfort, efficiency, and reliability. Users often remove upper extremity garment layers depending on the temperature and nature of their snow sport activities. It is therefore possible that a user may be forced to remove an avalanche transceiver and thereby expose the user to danger or loss of the avalanche transceiver. Previous attempts at developing lower extremity avalanche transceiver attachment systems have failed to securely attach the transceiver to the user. For example, positioning a transceiver within an external pocket may result in transceiver loss if the external surface of the pocket is damaged during an avalanche. Embodiments of the present invention provide a secure redundant lower extremity attachment system that includes a continuous strap coupled to a waist belt region and encircling the transceiver. A user will always wear some form of waist belt and is very unlikely to remove their lower extremity garment during a snow sport activity. Therefore, by three dimensionally encircling the transceiver with a continuous strap that also extends around the user's waist belt via a belt loop, the avalanche transceiver cannot be decoupled from the user even if the lower extremity garment is substantially sheared apart.

These and other features and advantages of the present invention will be set forth or will become more fully apparent in the description that follows and in the appended claims. The features and advantages may be realized and obtained by means of the instruments and combinations particularly pointed out in the appended claims. Furthermore, the features and advantages of the invention may be learned by the practice of the invention or will be obvious from the description, as set forth hereinafter.

### BRIEF DESCRIPTION OF THE DRAWINGS

The following description of the invention can be understood in light of the Figures, which illustrate specific aspects of the invention and are a part of the specification. Together with the following description, the Figures demonstrate and explain the principles of the invention. In the Figures, the physical dimensions may be exaggerated for clarity. The same reference numerals in different drawings represent the same element, and thus their descriptions will be omitted.
Figure 1A illustrates a perspective view of a snow sport lower body avalanche transceiver attachment system in accordance with embodiments of the present invention;
Figure 1B illustrates an exterior view of the pocket of the system illustrated in Figure 1A;
Figure 1C illustrates an interior view of the pocket of the system illustrated in Figure 1A;
Figure 1D illustrates components of the system illustrated in Figure 1A;
Figure 2A illustrates a perspective view of a snow sport lower body avalanche transceiver attachment system illustrated in Figure 1A;
Figure 2B illustrates a schematic interior view of the pocket of the system illustrated in Figure 1A;
Figure 3A illustrates a schematic interior view of the pocket of the system illustrated in Figure 1A; and
Figure 3B illustrates a schematic stitching view of the pocket of the system illustrated in Figure 1A.

### DETAILED DESCRIPTION OF THE INVENTION

The present invention relates to avalanche transceiver carrying systems. One embodiment of the present invention relates to a snow sport lower body avalanche transceiver attachment system including a garment, a pocket, a sleeve, and a continuous strap. The garment is a lower extremity snow sport garment such as a pair of snow pants or bib with a waist belt region and a pair of leg members. The pocket is located on one of the leg members and includes an internal region and a selective closure system such as a zipper. The sleeve is located within the internal region of the pocket and includes an opening and an internal transceiver region shaped to accommodate an avalanche transceiver. The continuous strap may be a single piece of nylon webbing stitched in one or more locations. The continuous strap encircles the transceiver region of the sleeve and extends to the waist belt region of the garment. The continuous strap includes a releasable buckle over an opening to the sleeve and forms a waist belt loop on the waist belt region. The continuous strap therefore secures the coupling between the transceiver and the user that is comparable to a conventional chest strap configuration. A second embodiment of the present invention relates to a method of coupling an avalanche transceiver to a lower extremity snow sport garment. Also, while embodiments are described in reference to a snow pants, it will be appreciated that the teachings of the present invention are applicable to other types of lower extremity garments, including but not limited to bibs, harnesses, etc.

The following terms are defined as follows:

### DEFINITIONS

Lower extremity snow sport garment - a garment designed to cover the lower extremity portion of a user's body, including but not limited to pants, bibs, one-piece garments, shorts, and leggings.

Avalanche transceiver - an avalanche device including at least a wireless transmitter for locating an attached avalanche victim. A transceiver may also include a wireless receiving to be used in locating an avalanche victim.

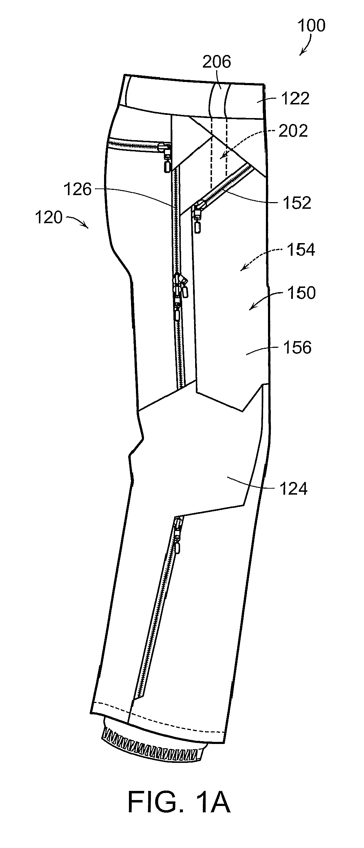

Reference is initially made to Figures 1A-D, which illustrates a snow sport lower body avalanche transceiver attachment system, designated generally at 100. The system 100 primarily includes a garment 120, a pocket 150, a sleeve 170, and a continuous strap 190. Figure 1A illustrates a profile view of a pair of snow sport pants, referred to as the garment 120. The garment 120 further includes a waist belt region 122, a pair of leg members 124, and a plurality of optional ventilation zippers 126. It will be appreciated that various alternative lower extremity covering garments may be used in accordance with embodiments of the present invention. The waist belt region 122 is a circular region corresponding to the user's waist or navel region. The waist belt region 122 may include a plurality of waist belt loops through which a belt may be extended and intercoupled. The use of conventional belt loops allows for the incorporation of a standard belt which may be provided with the garment or by the user. The leg members 124 extend over each of the user's legs in a substantially cylindrical manner.

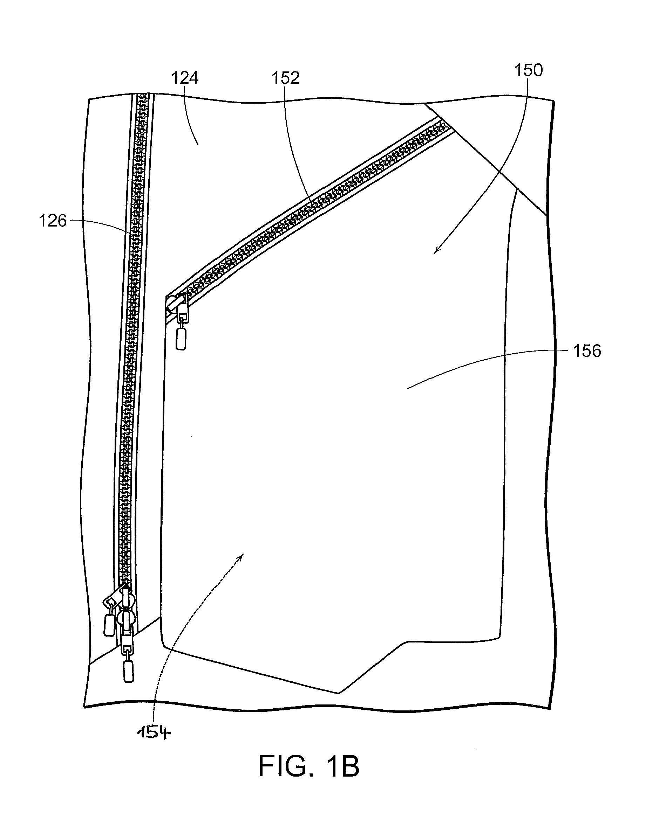

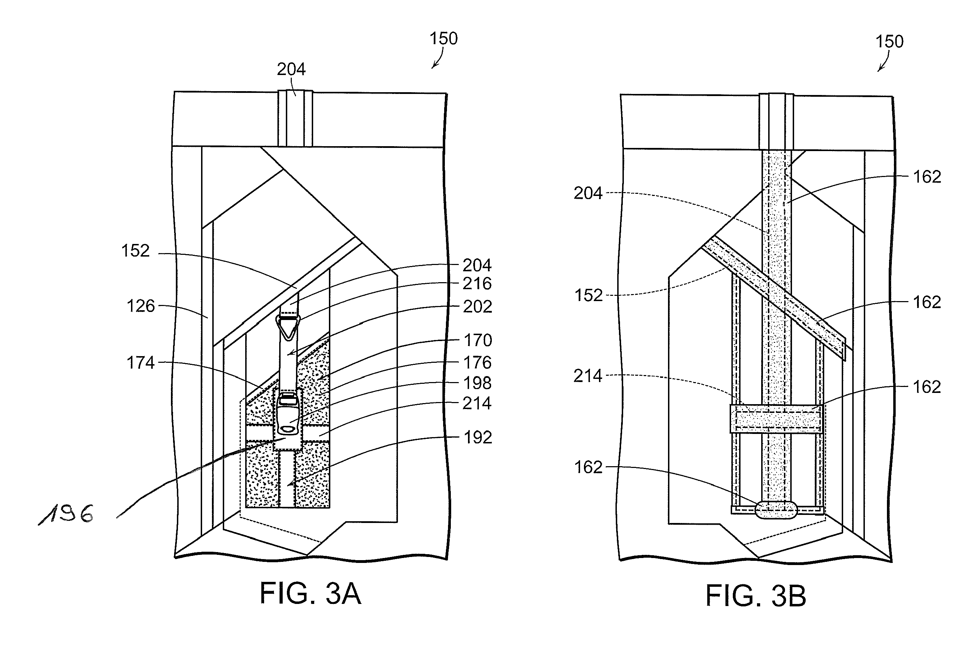

The pocket 150 is disposed on one of the pair of leg members 124 of the garment. In the illustrated embodiment (see Figure 1A), the pocket 150 is disposed on one of the pair of leg members 124, the user's right leg member, in the quadriceps muscle region. The pocket 150 primarily includes a selective closure system 152, an interior region 154, and an exterior 156. Figure 1B illustrates an external surface view of the pocket 150 shown in Figure 1A. The illustrated selective closure system 152 is a diagonally oriented zipper on the upper end of the pocket 150. The angle and orientation of the selective closure system 152 corresponds to a user's ergonomics and anatomy. For example, the selective closure system 152 may be configured to close by extending a zipper in a downward direction to enable a user to easily actuate the zipper with a gloved hand. Likewise, the location of the zipper may correspond to an average hand position with respect to a user's waist. The selective closure system 152 is disposed over an opening to the interior region 154. The opening may be configured to expand the interior region 154 via some form of foldable sidewall. The expanding opening is also configured to optimize ergonomic efficiency of the user with a gloved or covered hand. For example, a user may selectively open the selective closure system 152 and expand the interior region 154, thereby providing a larger opening than the length of the selective closure system 152 (i.e. zipper). The interior region 154 is the three dimension region disposed within the pocket 150, which is selectively enclosed by the closure system 152. The exterior 156 is the external surface of the pocket 150 facing away from the user. One or more additional layers of material may be disposed on the interior side of the interior region 154 corresponding to the exterior 156. For example, an impact absorbing material such as foam may be coupled to the interior of the interior region to protect the interior region 154 from external impact. Likewise, various water resistant materials such as seam tape may be applied to the interior region to create a water-resistant property of the pocket 150. In addition, various water resistant configurations may be implemented to meet trade name requirements such as GORE-TEX. Additional description of seam tape manufacturing will be discussed below in reference to Figure 3B.

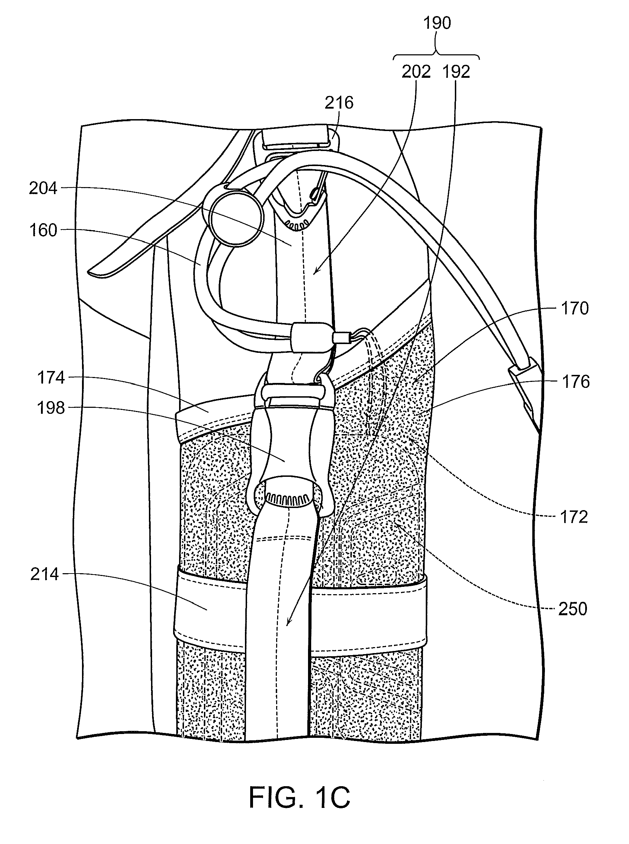

The sleeve 170 is disposed within the interior region 154 of the pocket 150. The sleeve 170 includes an opening 174, a transceiver region 172, and an exterior 176. The transceiver region 172 is an at least partially enclosed, three dimensional region corresponding in shape and volume to an avalanche transceiver. The opening 174 forms an access to the transceiver region 172. The opening 174 may be fixably open (illustrated sleeve Figure 1 C) or may be selectively closeable via some form of closure system such as VELCRO, button, zipper, etc. The illustrated opening 174 is disposed on the top of the sleeve 170 and oriented to correspond to the selective closure system 152 of the pocket 150. For example, in the illustrated embodiment, the opening 174 is oriented diagonally and substantially parallel to the zipper of the pocket 150. The cut-away view of the sleeve 170 in Figure 1C illustrates the orientation of the opening 174 corresponding to the same external view of the pocket 150 shown in Figure 1B.

The continuous strap 190 is disposed in proximity to the sleeve 170 and extends to the waist region 122 of the garment 120. The continuous strap 190 includes a first portion 192 that encircles the transceiver region 172 with an encircling member 196 and a buckle 198. The illustrated encircling member 196 encircles the transceiver region 172 in a vertical orientation and is intercoupled with the buckle 198. The buckle 198 may be a releasable buckle, including a female side coupled to one portion of the encircling member 196 and a male side coupled to another portion of the encircling member 196. The buckle 198 is disposed in proximity to the opening 174 of the sleeve such that a user may disengage the buckle 198 to permit access to the transceiver region 172. The buckle 198 is a releasable type buckle including a coupled state (Figure 1 C) and a decoupled state (not shown). The coupled state of the buckle 198 includes intercoupling portions of the encircling member 196 to continuously encircle the transceiver region 172. The decoupled state of the buckle 198 disconnects the encircling member 196 from itself and allows access to the transceiver region 172 via the opening 174. The female and male sides or portions of the buckle 198 may be surface mounted to the portions of the encircling member rather than end mounted. Surface mounting refers to a mounting or coupling configuration in which a substantially flat portion is fixably coupled to a substantially flat portion of the encircling member 196 that maintains the substantially parallel configuration between the buckle 198 and the strap (encircling member 196). An end mounting configuration is distinguishable in that it involves fixably coupling only a single end region of the buckle to a strap, thereby permitting the buckle 198 to pivot about the coupled end. It will be appreciated that either or both the female and male portions of the buckle 198 may be surface mounted to the encircling member 196. The buckle 198 is also a laterally releasable buckle in which the user initiated action to release the buckle is lateral or orthogonal to the surface mounting. For example, in the illustrated embodiment, the buckle 198 is releasable with a lateral upward force which is perpendicular/orthogonal to the exterior surface. This orientation of the user-initiated release force is intended to ensure reliability of the release mechanism and avoid accidental release. An alternative lateral release buckle 198 may include a conventional dual side release mechanism.

The encircling member 196 is a region of the first portion of the continuous strap 190 configured to three dimensionally encircle the entire transceiver region 172 along a single axis (vertical in the illustrated embodiment shown in Figure 1C). The encircling member 196 is composed of a strong material to reliably secure an avalanche transceiver disposed within the transceiver region 172. The encircling member 196 may be comprised of a webbing or strap material such as ½"-3" nylon webbing. The encircling member 196 may also include a self-stitch coupling to form the encircling of the transceiver region 172. A self-stitch coupling is an intercoupling of the encircling member 196 to itself.

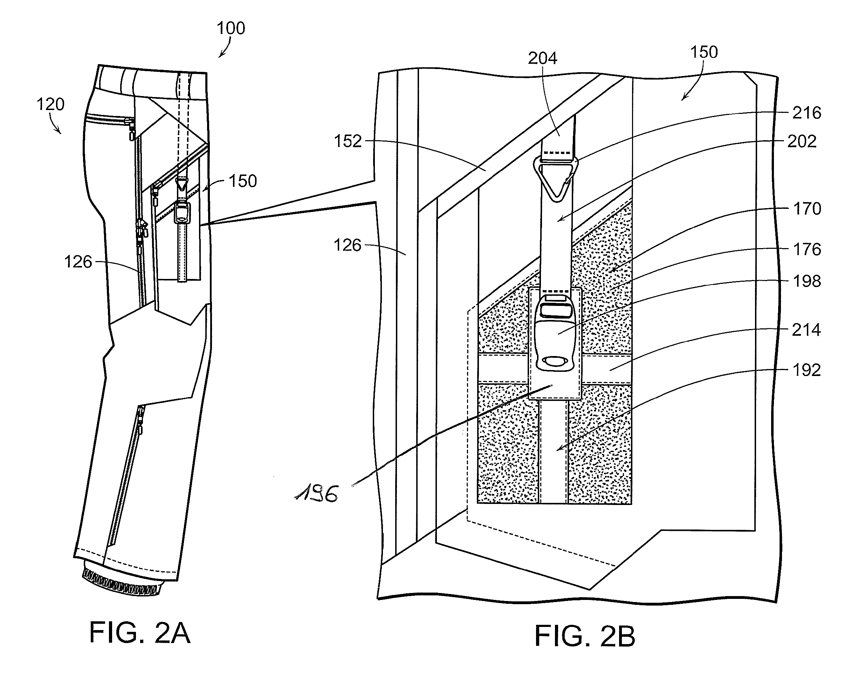

The second portion 202 of the continuous strap 190 extends from the first portion 192 to the waist belt region 122 of the garment 120. The second portion 202 includes a waist coupling member 204 and a waist belt loop 206. The waist coupling member 204 is part of the same continuous strap 190 as the encircling member 196 and therefore may comprise the same webbing or strap material. The waist coupling member 204 extends up the leg member 124 of the garment 120 to the waist belt region 122. A portion of the waist coupling member 204 may extend within the pocket 150 as illustrated in Figure 1C and within an interior surface of the leg member 122 as illustrated in Figure 2A. The waist belt loop 206 is formed by self-stitching a portion of the continuous strap 190 to itself. The continuous strap 190 thereby forms a secure harnessing of the transceiver region 172 to the waist belt region 122. The second portion 202 may also include a clip 216, which may be selectively coupled to a lanyard 160 for an additional attachment between the garment 120 and the avalanche transceiver 250.

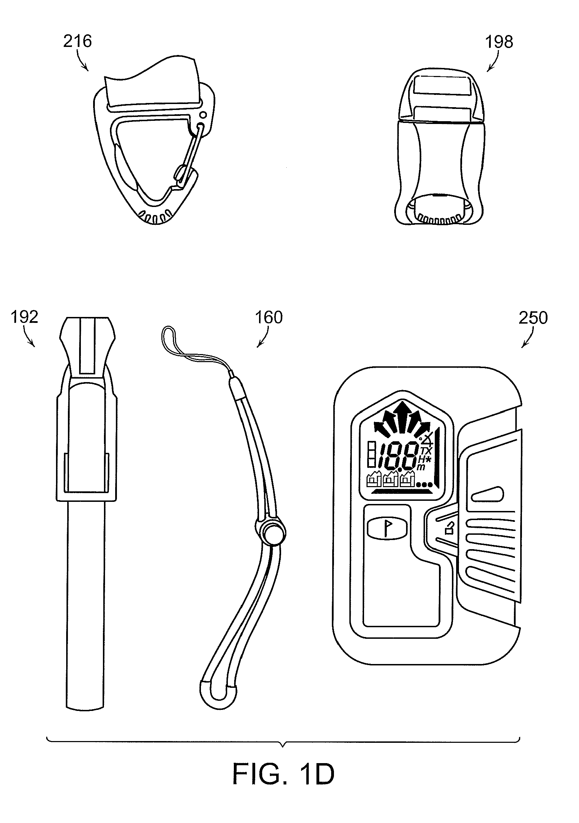

Figure 1D illustrates examples of a clip 216, buckle 198, first portion 192, lanyard 160, and avalanche transceiver 250. The clip 216 is a triangular, releasable carabiner type coupler with an opening biased toward a closed configuration. The buckle 198 is a male and female lateral releasable buckle configured for surface mounting. The first portion 192 is piece of webbing. The lanyard 160 is a loop of cord which may be girth-hitched to a recess on an avalanche transceiver 250. The avalanche transceiver 250 is a conventional transmitter and receiver avalanche transceiver, illustrating the form factor.

An optional second strap 214 is configured to encircle the transceiver region 172 of the sleeve along an axis that is orthogonal to the encircling member 196. In the illustrated embodiment, the second strap 214 is oriented in a horizontal configuration orthogonal to the vertical orientation of the encircling member 196. The second strap 215 is also composed of a strong webbing material but is not part of the same strap forming the continuous strap 190. The second strap 206 may be coupled to the continuous strap 190 via a stich coupling. The purpose of the second strap 206 is to further increase the security of the transceiver region 172. For example, if the exterior 156 of the pocket 150 and the exterior 176 of the sleeve 170 are damaged during an avalanche, it is possible that the avalanche transceiver 250 could slide horizontally out of the transceiver region 172 even if the continuous strap 190 remains undamaged. Therefore, the additional encircling of the transceiver region 172 provides redundant coupling of the avalanche transceiver.

In operation, a user may selectively open the closure system 152 of the pocket 150 to expose the sleeve 170. The user may then disengage the buckle 198 and the encircling of the first portion 192 to permit access to the opening 174 of the sleeve 170. The user may position an avalanche transceiver 250 within the transceiver region 172 of the sleeve 170. The user may then reengage the buckle 198 to form the encircling of the transceiver region 172 and couple the avalanche transceiver 250 with the continuous strap 190. The user may also extend and intercouple a belt through the waist belt loop 206 and around the waist region 122 of the garment 120. The user intercoupling of the belt thereby creates a continuous harness or attachment system around both the user's waist/navel and the avalanche transceiver 250.

Reference is next made to Figures 2A-B which further illustrate the pocket 150 portion of the snow sport lower body avalanche transceiver attachment system 100. Figure 2A illustrates the relative positioning of the pocket 150, sleeve 170, and continuous strap 190 with respect to the garment 120. Figure 2B illustrates a manufacturing schematic material view of the pocket 150, sleeve 170, and continuous strap 190.

Reference is next made to Figures 3A-B which further illustrate the pocket 150 portion of the snow sport lower body avalanche transceiver attachment system 100. Figure 3A illustrates another manufacturing schematic material view of the pocket 150, sleeve 170, and continuous strap 190. Figure 3B illustrates an internal view of the pocket 150, illustrating a plurality of seam tape 162 positioned to create a water-resistant property for the interior region 154 of the pocket with respect to the exterior 156.

It should be noted that various alternative system designs may be practiced in accordance with the present invention, including one or more portions or concepts of the embodiment illustrated in Figure 1 or described above. Various other embodiments have been contemplated, including combinations in whole or in part of the embodiments described above.

**List of reference signs:**

| | | | |
|---|---|---|---|
| 100 | snow sport lower body avalanche transceiver attachment system | 250 | avalanche transceiver |
| 120 | garment | | |
| 122 | waist belt region | | |
| 124 | pair of leg members | | |
| 126 | ventilation zipper | | |
| | | | |
| 150 | pocket | | |
| 152 | selective closure system | | |
| 154 | interior region | | |
| 156 | exterior | | |
| | | | |
| | | | |
| 160 | lanyard | | |
| 162 | seam tape | | |
| | | | |
| 170 | sleeve | | |
| 172 | transceiver region | | |
| 174 | opening | | |
| 176 | exterior | | |
| | | | |
| 190 | continuous strap | | |
| 192 | portion | | |
| 196 | encircling member | | |
| 198 | buckle | | |
| | | | |
| | | | |
| 202 | portion | | |
| 204 | waist coupling member | | |
| 206 | waist belt loop | | |
| | | | |
| 214 | strap | | |
| 216 | clip | | |
| | | | |

## Claims

1. A snow sport lower body avalanche transceiver attachment system (100) comprising:
a lower extremity snow sport garment (120) including a waist belt region (122) and a pair of leg members (124);
a pocket (150) disposed on one of the leg members (124) including a substantially enclosed interior region (154) and a selective closure system (152);
a sleeve (170) disposed within the interior region (154), wherein the sleeve (170) includes an opening (174) and an internal transceiver region (172) corresponding in shape to an avalanche transceiver (250); and
a continuous strap (190) with a first portion (192) encircling the transceiver region (172) of the sleeve (170) and a second portion (202) extending to the waist belt region (122), wherein the second portion (202) includes a loop externally disposed on the waist belt region (122), and wherein the first portion (192) includes an encircling member (196) intercoupled with a releasable buckle (198) disposed in proximity to the opening (174) ofthe sleeve (170).

2. The system of claim 1, wherein the selective closure system (152) is a zipper that selectively encloses the interior region (154) of the pocket (150).

3. The system of claim 1, wherein the releasable buckle (198) includes a coupled state and a decoupled state, and wherein the coupled state includes intercoupling the encircling member (196) to encircle the transceiver region (172).

4. The system of claim 1, wherein the opening (174) of the sleeve (170) is aligned with the selective closure system 152) of the pocket (150).

5. The system of claim 1, wherein the continuous strap (190) comprises a single piece of nylon webbing.

6. The system of claim 1, wherein the continuous strap (190) includes two self-stitch couplings to form the encircling of the transceiver region (172) and the loop.

7. The system of claim 1, further including a second strap (214) encircling the transceiver region (172) and fixably coupled to the first portion (192) of the continuous strap (190).

8. The system of claim 7, wherein the second strap (214) encircles the transceiver region (172) orthogonal to the first portion (192) of the continuous strap (190) encircling of the transceiver region (172).

9. The system of claim 7, wherein the second strap (214) horizontally encircles the transceiver region (172).

10. The system of claim 1, wherein the buckle (198) is surface mounted to the first portion (192).

11. The system of claim 1, wherein the pocket (150) includes a foam member disposed between the interior region (154) and an external surface.

12. The system of claim 1, wherein the continuous strap (190) includes a clip (216) disposed within the pocket (150) on the second portion (202) extending to the waist belt region (204).

13. The system of claim 12, wherein the clip (216) is configured to releasably engage a lanyard (160) coupled to a transceiver disposed within the transceiver region (172) independent of the continuous strap (190).

14. The system of claim 1, wherein the pocket (150) includes a seam taping construction configured to make the pocket substantially water resistant.

15. The system of claim 1, wherein the selective closure system (152) includes an expandable opening to the internal region (154).

16. A snow sport lower body avalanche transceiver attachment system (100) comprising:
a lower extremity snow sport garment (120) including a waist belt region (122) and two leg members (124);
a pocket (150) disposed on one of the leg members (124) including a substantially enclosed interior region (154) and a selective closure system (152);
a sleeve (170) disposed within the interior region (154), wherein the sleeve (170) includes an opening (174) and an internal transceiver region (172) corresponding in shape to an avalanche transceiver (250);
a continuous strap (190) with a first portion (192) encircling the transceiver region (250) of the sleeve (170) and a second portion (202) extending to the waist belt region (122), wherein the second portion (202) includes a loop, serving as waist belt loop (206), externally disposed on the waist belt region (122), and wherein the first portion (192) includes a releasable buckle (198) disposed over the opening (174) of the sleeve (170); and
a second strap (214) encircling the transceiver region (172) and fixably coupled to the first portion (192) of the continuous strap (190), wherein the second strap (214) encircles the transceiver region (172) orthogonal to the continuous strap (190) encircling of the transceiver region (172).

17. A method for securing an avalanche transceiver (250) to a lower extremity snow sport garment comprising the acts of:
providing a lower extremity snow sport garment including a waist belt region (122) and two leg members (124);
providing a pocket (150) disposed on one of the leg members (124) including a substantially enclosed interior region (154) and a selective closure system (152);
positioning an avalanche transceiver (250) within the interior region (154);
encircling the avalanche transceiver (250) with a first portion of a continuous strap (190) including positioning a releasable buckle (198) on the continuous strap (190); and
extending a second portion (202) of the continuous strap (190) to the waist belt region (122) to form a loop externally disposed on the waist belt region (122).

18. The method of claim 17, wherein the act of encircling the avalanche transceiver (250) with a first portion (192) of a continuous strap (190) includes stitching together two separate locations of the continuous strap (190).

19. The method of claim 17 further includes the act of encircling the avalanche transceiver (250) with a second strap (214) orthogonal to the continuous strap (190) and fixably coupled to the continuous strap (190).

20. The method of claim 17, wherein the act of positioning an avalanche transceiver (250) within the interior region (154) includes positioning the avalanche transceiver (250) within a sleeve (170).
